# EUROPÄISCHE PATENTSCHRIFT

(11) **EP 0 339 225 B1**
(45) Veröffentlichungstag und Bekanntmachung des Hinweises auf die Patenterteilung: **29.09.1999**
(21) Anmeldenummer: 89104276.4
(22) Anmeldetag: 10.03.1989
(51) Int. Cl.: G01D 15/24

(54) **Anordnung für ein Registriergerät**
Device for a recording apparatus
Dispositif pour enregistrer

(30) Priorität: 02.04.1988 DE 8804412 U
(43) Veröffentlichungstag der Anmeldung: 02.11.1989
(73) Patentinhaber: Mannesmann VDO AG, 60326 Frankfurt (DE)
(72) Erfinder: Helmschrott, Norbert, D-7730 Villigen-Schwenningen (DE); Höni, Helmut, Dipl.-Ing. (FH), D-7234 Aichhalden (DE); Säger, Benjamin, Dipl.-Ing. (FH), D-7730 Villingen-Schwenningen (DE)

(56) Entgegenhaltungen:
- DE-A- 2 917 329
- DE-A- 3 313 770
- US-A- 4 500 892
- PATENT ABSTRACTS OF JAPAN vol. 8, no. 95 (E-242)2. Mai 1982 & JP-A-59 014 380 (HITACHI KOKI KK ) 25. Januar 1982
- Tochtermann/Bodenstein: "Konstruktionselemente des Maschinenbaus", 9. Auflage, Teil 1, Springer-Verlag Berlin 1979, Seiten 186-189
- G. Niemann: "Maschinenelemente", Band I, 2. Auflage, Springer-Verlag Berlin, 1981, Seiten 228-229 und 238-239

## Beschreibung

Die Erfindung betrifft eine Registrieranordnung für ein Registriergerät, die folgende Merkmale aufweist:
Einen auf einer Führungsstange quer zur Transportrichtung eines Aufzeichnungsträgers verschiebbar und um die Führungsstange schwenkbar gelagerten Registrierschlitten, welcher ein Registrierorgan trägt und mit Antriebsmitteln verbindbar ist, die Bewegungen des Registrierschlittens in Richtung der Führungsstange bewirken, wobei der Registrierschlitten einen angeformten Arm umfaßt, mittels dessen die Verschwenkung des Registrierschlittens erfolgt; und Mittel zum Verschwenken des
Registrierschlittens, welche an dessem Arm angreifen und bewirken, daß in jeder Stellung des Registrierschlittens auf der Führungsstange das Registrierorgan entweder federnd auf dem Aufzeichnungsträger aufliegt oder von dem Aufzeichnungsträger abgehoben ist.

Eine derartige Anordnung für ein Registriergerät wird vorzugsweise in Registriergeräten angewandt, bei denen wegen hoher Genauigkeitsanforderungen an die Aufzeichnungen über einen relativ breiten Registrierbereich eine absolut geradlinige Führung eines Registrierorgans erforderlich ist. Außerdem bietet diese Lösung den Vorteil, daß ein und derselben Führung mehrere meßwertabhängig oder von Status- bzw. Grenzwertgebern gesteuerte Registrierschlitten zugeordnet werden können. Ferner gestattet eine solche Anordnung bei Aufzeichnungsverfahren, bei denen die Aufzeichnungen berührungsabhängig erfolgen, der Aufzeichnungsträger beispielsweise eine wachsähnliche Registrierschicht trägt oder das Registrieren mittels Farbübertragung erfolgt, mit ein und demselben Registrierorgan in mehreren, unter Umständen dicht beieinander liegenden, aber voneinander unabhängigen Registrierspuren zu registrieren, wobei der Registrierschlitten ohne Aufzeichnungsfunktion stetig quer zur Transportrichtung des Aufzeichnungsträgers hin und her bewegt und das Registrierorgan zum Aufzeichnen auf den Aufzeichnungsträger abgesetzt und wieder angehoben werden muß.

Ein Anheben des oder der Registrierorgane vom Aufzeichnungsträger bzw. von der Registrierebene ist, um Störungen durch Anstoßen des Aufzeichnungsträgers an den Registrierorganen und Kratz- oder Aufzeichnungsspuren auf der Registrierfläche zu vermeiden, auch dann erforderlich, wenn beim Wechseln des Aufzeichnungsträgers dieser im wesentlichen in der Registrierebene in seine Registrierposition transportiert und von dieser wieder ausgegeben bzw. entnommen wird.

Mit der DE-A 29 17 329 ist eine gattungsgemäße Anordnung für ein Registriergerät bekannt geworden, bei welcher das Anheben und Absenken der Registrierorgane mittels eines sich parallel zu den die Registrierorgane lagernden Führungsstangen erstreckenden und über ein Hebelgetriebe beim Öffnen und Schließen des Gerätedeckels betätigbaren Steges erfolgt, welcher unter der Wirkung einer Zugfeder steht. Diese Lösung ist aufwendig und wenig fertigungsfreundlich. Sie ist ferner auf eine ganz spezielle Gerätearchitektur beschränkt und keinesfalls für ein sog. Einbaugerät geeignet. Sie ist andererseits aber auch nicht brauchbar für ein schnelles Heben und Senken eines Registrierorgans, das für ein mehrspuriges Aufzeichnen vorgesehen ist. Zweifellos ist der Raumbedarf nicht zuletzt auch deshalb erheblich, weil sowohl für die Wirkverbindung zwischen den Registrierorgangen und dem Steg beim Heben und Senken als auch für die Schaffung der Registrierkraft eine einseitig ortsfest angeordnete Zugfeder Anwendung findet, wobei in Kauf genommen wird, daß die Registrierkraft über dem Registrierbereich ungleichmäßig ist und somit ein relativ kurzer Registrierbereich gewählt werden muß bzw. das betreffende Registriergerät lediglich für untergeordnete Registrierzwecke einsetzbar ist. Aufgrund des Raumbedarfs kann dieses Registriergerät den Ansprüchen eines Registriergerätes, bei dem der Aufzeichnungsträger durch einen Schlitz eingegeben wird und die Registrierposition somit völlig unzugänglich ist, keinesfalls gerecht werden.

Ferner ist, wie die DE-A 33 13 770 zeigt, im Zusammenhang mit einem Plotter bekannt, auf dem in x - und y - Richtung bewegbaren Registrierschlitten einen den Zeichenstift des Plotters tragenden Arm schwenkbar zu lagern. Die dargestellte Konstruktion ist fertigungstechnisch aufwendig und für ein Registriergerät auch aufgrund des Raumbedarfs ungeeignet.

Außerdem ist mit der US-A 4 500 892 ein Thermodrucker bekannt geworden, bei dem ein Verschwenken der Anpreßplatte mittels des Druckkopfes vorgesehen ist, um den Vorschub des Druckträgers zu ermöglichen. Eine Anregung für eine technisch einfache Ausbildung einer für ein Registriergerät vorgesehenen gattungsgemäßen Registrieranordnung kann der vorbekannte Thermodrucker jedoch nicht bieten.

Die Aufgabe der vorliegenden Erfindung ist es, eine Registrieranordnung für ein Registriergerät gemäß der im Patentanspruch genannten Gattung zu schaffen, welche ein Minimum an Bauhöhe ermöglicht, ein hohes Maß an Funktionssicherheit bietet und serienfertigungsfähig ist.

Die Lösung dieser Aufgabe sieht vor, daß der Registrierschlitten über eine Verzahnung mit den Antriebsmitteln verbindbar ist; die am Arm des Registrierschlittens angreifenden Mittel zum Verschwenken des Registrierschlittens aus einer achsparallel zur Führungsstange angeordneten und getrieblich mit einem Stellmotor verbindbaren Exzenterwelle gebildet sind, die mit dem Arm in Wirkverbindung steht; und an dem Registrierschlitten eine Schenkel- oder Blattfeder befestigt ist derart, daß bei einer Drehung der Exzenterwelle gegen den Aufzeichnungsträger und der dadurch bewirkten Verschwenkung des Registrierschlittens die Schenkel- oder Blattfeder zur Erzielung der erforderlichen Registrierkraft des Registrierorgans auf dem Aufzeichnungsträger gespannt wird.

Die Erfindung bietet den Vorteil, daß sie, abgesehen davon, daß die gestellte Aufgabe zufriedenstellend gelöst ist, den Bau einer Anordnung für ein Registriergerät ermöglicht, die als funktionsfertige Baugruppe mit guter Raumnutzung in ein Registriergerät einsetzbar ist. Sie zeichnet sich ferner durch einfache Bauteile, einfache Montage und somit eine gute Reproduzierbarkeit aus und bietet durch gleichmäßige Registrierkraft über den gesamten Registrierbereich gleichbleibende Registrierqualität. Eine besonders vorteilhafte Optimierung stellt die Verwendung einer Schenkelfeder für die Schaffung der Registrierkraft dar. Die Schenkelfeder hat die Eigenschaft, innerhalb relativ großer Fertigungs- und Montagetoleranzen eine gleichmäßige Registrierkraft zu liefern, das heißt, ein Justieren im montierten Zustand ist nicht erforderlich und allfällige Kontrollen können sich auf die Prüfung der Schenkelfeder bei deren Fertigung beschränken.

Vorteilhaft ist ferner, daß im Falle einer spritzgußtechnischen Herstellung des Registrierschlittens die Aufnahme- und Halterungsmittel für die Schenkelfeder unmittelbar an dem Arm des Registrierschlittens anformbar sind.

Das Registrierorgan kann mit dem Registrierschlitten fest verbunden oder am Registrierschlitten federnd gelagert sein, wobei im letzteren Falle eine formschlüssige Verbindung zwischen dem Arm des Registrierschlittens und der Exzenterwelle erforderlich ist. Entscheidend ist, daß aus dem durch die zwingend erforderliche Bauhöhe des Registrierschlittens gegeben, flachen Bauraum lediglich die Spitze des Registrierorgans herausragt und daß sich die das Anheben und Absenken steuernde Exzenterwelle und die die Registrierkraft liefernde Feder innerhalb dieses Bauraumes befinden. Aus diesem Grunde und auch dadurch, daß der Registrierschlitten und damit das Registrierorgan unmittelbar mittels der Feder in die Registrierposition geführt und mittels eines zusätzlichen Überhubes die Registrierkraft erzeugt wird, ergeben sich kurze Umschaltwege, ein schnelles Umschalten in die beiden Zustände "angehoben" und "abgesenkt" und eine gute Eignung als Mehrfachschreibsystem.

Im folgenden sei die Erfindung anhand der beigefügten Zeichnungen näher erläutert. Es zeigen:
FIGUR 1 eine Draufsicht eines erfindungsgemäß auf einer Führungsstange gelagerten und einer Exzenterwelle zugeordneten Registrierschlittens,
FIGUR 2 und FIGUR 3 vergrößerte Schnittdarstellungen der Anordnung gemäß der Schnittlinie AB in FIGUR 1 mit einerseits vom Aufzeichnungsträger angehobener, andererseits abgesenkter Position des Registrierorgans,
FIGUREN 4 A, B bis FIGUREN 7 A, B Schemaskizzen weiterer Ausführungsbeispiele der erfindungsgemäßen Anordnung.

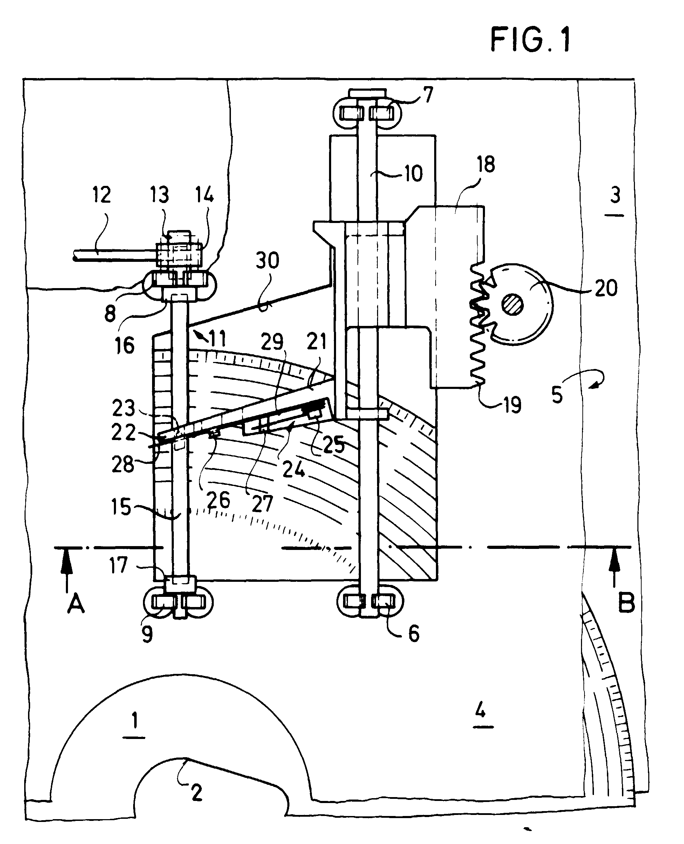

Gemäß FIGUR 1 liegt eine als Aufzeichnungsträger dienende Diagrammscheibe 1, wenn sie sich in ihrer Registrierposition befindet, wo sie über eine Zentrieröffnung 2 von nicht dargestellten Zentrier- und zeitabhängig umlaufenden Mitnahmemitteln aufgenommen ist, zwischen zwei Platten 3 und 4, welche in dem betreffenden Registriergerät einen Führungsschacht 5 bilden. An der Platte 4 sind Halter 6, 7, 8 und 9 vorzugsweise spritzgußtechnisch angeformt. Das eine Halterpaar 6/7 dient der Befestigung einer Führungsstange 10, in dem anderen Halterpaar 8/9 ist eine Exzenterwelle 11 gelagert, welche von einem nicht dargestellten Stellmotor über eine Welle 12 und eine Schraubradverbindung 13/14 antreibbar ist. Bei dem dargestellten Ausführungsbeispiel besteht die Exzenterwelle 11 aus einer zylindrischen Stange 15, welche in in den Haltern 8 und 9 gelagerten Mitnehmern 16 und 17 exzentrisch aufgenommen ist. Dem einen Halter 16 ist das Schraubenrad 14 zugeordnet.

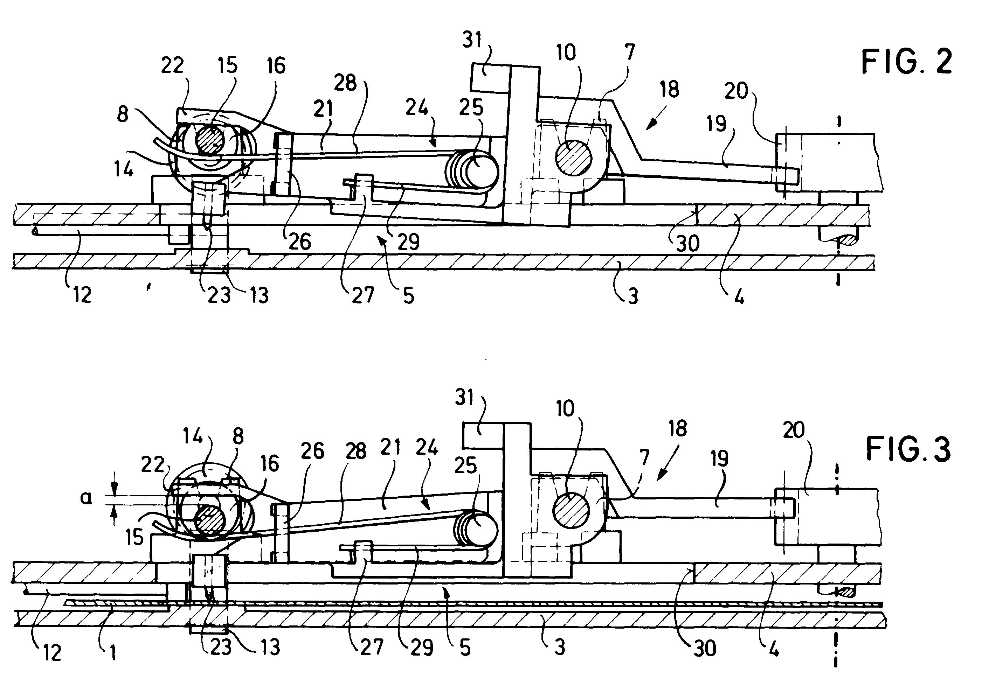

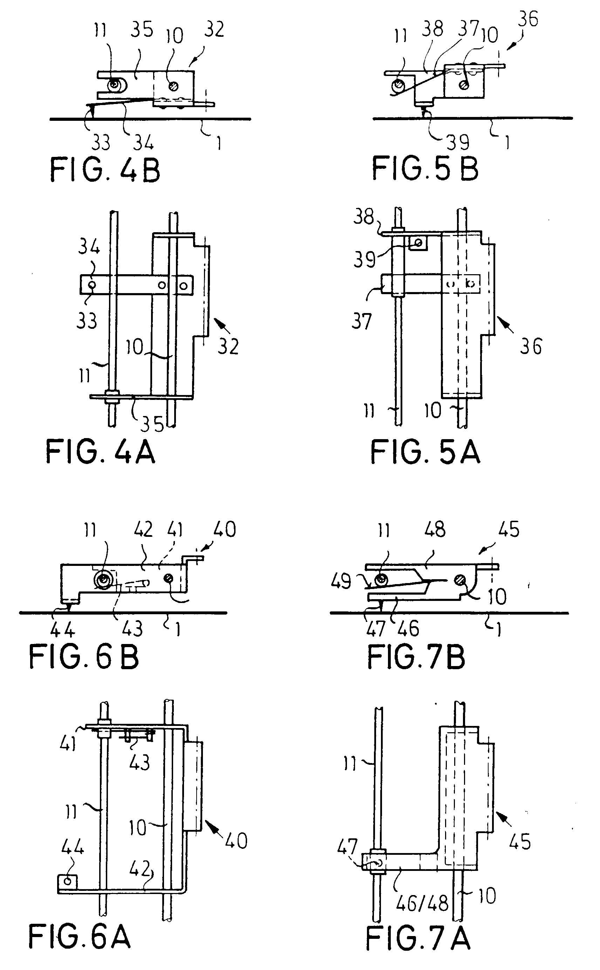

Wie ferner aus der FIGUR 1 hervorgeht, ist auf der Führungsstange 10 ein Registrierschlitten 18 verschiebbar gelagert. Der Registrierschlitten 18, der als Spritzgußteil ausgebildet ist, weist eine Verzahnung 19 auf, über die er mit einem meßwertabhängig antreibbaren Zahnrad 20 in Eingriff steht, welches beispielsweise den mechanischen Ausgang eines Servosystems bildet, das entweder als Baugruppe an der Platte 3 angeflanscht sein oder auf der Platte 4 angeordnet sein kann. An dem Registrierschlitten 18 ist außerdem ein Arm 21 ausgebildet, der mit einem Finger 22 in den Bewegungsbereich der Exzenterwelle 11 eingreift. Ferner sind an dem Arm 21 das eigentliche Registrierorgan 23 in Form eines Registrierstiftes befestigt und eine die Registrierkraft liefernde Schenkelfeder 24 gehaltert. Dabei dient ein Zapfen 25 der Zentrierung der Schenkelfeder 24, während eine an dem Arm 21 angeformte Öse 26 sowie eine Stütze 27 für die Fixierung der Schenkel 28 und 29 der Schenkelfeder 24 vorgesehen sind. Mit 30 ist eine Aussparung in der Platte 4 bezeichnet, die, wie aus den FIGUREN 2 und 3 ersichtlich ist, ein Eintauchen des Registrierschlittens 18 in die Plattenebene und somit eine weitgehende Bauraumverdichtung ermöglicht, aber auch für das Durchgreifen des Registrierorgans 23 auf die Diagrammscheibe 1 erforderlich ist. 31 bezeichnet einen an dem Registrierschlitten 18 ausgebildeten Ansatz, über den der Registrierschlitten 18 eine weitere Mitnahmefunktion ausübt.

Die FIGUR 2 zeigt den Registrierschlitten 18 in einer Stellung, in der das Registrierorgan 23 von der Registrierebene abgehoben ist. Dabei wirkt die Exzenterwelle 11 mit dem Finger 22 des Armes 21 zusammen, und zwar unter einer gewissen Vorspannung durch die Schenkelfeder 24 bzw. deren ebenfalls an der Exzenterwelle 11 angreifenden Schenkel 28. Wie aus der FIGUR 2 ersichtlich ist, bleibt auch in der angehobenen Stellung die Verzahnung des Registrierschlittens 18 mit dem Zahnrad 20 in Eingriff, so daß beispielsweise über das Zahnrad 20 bei der Verwendung als Mehrfachschreiber der für diese Anwendung erforderliche, stetig oszillierende Antrieb des Registrierschlittens 18 erfolgen könnte. Dabei ist es selbstverständlich, daß, um Verschleiß zu vermeiden und die Antriebsenergie zu minimieren, die aufeinander gleitenden Flächen des Fingers 22, des Schenkels 28 und der Stange 15 mit hoher Oberflächengüte gefertigt sein müssen.

Wird im Zustand gemäß FIGUR 2, beispielsweise durch ein beim Positionieren der Diagrammscheibe 1 erzeugtes Signal, die Exzenterwelle 11 vorzugsweise um einen Winkel von 180° angetrieben, so verschwenkt die Exzenterwelle 11 bzw. die Stange 15 mittelbar über den Schenkel 28 der Schenkelfeder 24 den Registrierschlitten 18 soweit, bis das Registrierorgan 23 auf der Diagrammscheibe 1 aufsitzt. Durch einen zusätzlichen Leerhub um das Maß a wird die erforderliche Reigistrierkraft von beispielsweise 10p erzeugt. Dieser Zustand ist in FIGUR 3 dargestellt.

Von den schematisch skizzierten weiteren Ausführungsbeispielen FIGUREN 4A, B bis FIGUREN 7A, B der erfindungsgemäßen Registrieranordnung zeigen die Skizzen FIGUR 4A und FIGUR 4B einen modifizierten Registrierschlitten 32, an dem eine das Registrierorgan 33 tragende Blattfeder 34 befestigt ist. Bei diesem Ausführungsbeispiel ist es erforderlich, daß der am Registrierschlitten 32 angeformte Arm 35 die Exzenterwelle 11 formschlüssig umgreift. Zweckmäßigerweise wird, um eine bessere Justierung zu erzielen, der Blattfeder 34 eine Abstützung zuzuordnen sein. Außerdem könnte das Registrierorgan 33 unmittelbar an der Blattfeder 34 angeformt werden.

Beim Ausführungsbeispiel FIGUR 5A und FIGUR 5B ist an dem Registrierschlitten 36 eine Blattfeder 37 befestigt, die sich an der Exzenterwelle 11 abstützt, während an dem Arm 38 des Registrierschlittens 36 ein Registrierorgan 39 fest angeordnet ist.

Die FIGUREN 6A und 6B zeigen ein Ausführungsbeispiel, welches im wesentlichen dem eingangs beschriebenen, bevorzugten Ausführungsbeispiel entspricht. Der Registrierschlitten 40 ist jedoch als ein mit zwei Armen 41 und 42 versehenes Biegeteil ausgebildet, wobei die beiden Arme 41 und 42 bezogen auf die Führungsstange 10 in verschiedenen Ebenen liegen. An dem einen Arm 41 ist eine Schenkelfeder 43 angeordnet, an dem anderen Arm 42 ein Registrierorgan 44 befestigt.

Mit den FIGUREN 7A und 7B ist eine Variante dargestellt, bei der der Registrierschlitten 45 als Spritzgußteil ausgebildet ist. Ein erster Arm 46 des Registrierschlittens 45 trägt ein Registrierorgan 47, ein zweiter Arm 48 greift in den Bewegungsbereich der Exzenterwelle 11 ein und eine Blattfeder 49 stützt sich mit ihrem freien Ende an der Exzenterwelle 11 ab. Dabei ist die Blattfeder 49 in dem Regisrtrierschlitten 45 einseitig eingespannt bzw. durch Einbetten oder Einklemmen befestigt.

Ferner sei noch erwähnt, daß mit der erfindungsgemäßen Anordnung den Platten 3 und 4, den diesen zugeordneten Antriebsmitteln und gegebenenfalls mit den die Diagrammscheiben zentrierenden und antreibenden Mitteln eine im Registriergerät einsetzbare Registrierbaugruppe bildbar ist.

## Patentansprüche

1. Registrieranordnung für ein Registriergerät, die folgende Merkmale aufweist:
- einen auf einer Führungsstange (10) quer zur Transportrichtung eines Aufzeichnungsträgers (1) verschiebbar und um die Führungsstange (10) schwenkbar gelagerten Registrierschlitten (18), welcher ein Registrierorgan (23) trägt und mit Antriebsmitteln (20) verbindbar ist, die Bewegungen des Registrierschlittens (18) in Richtung der Führungsstange (10) bewirken, wobei der Registrierschlitten (18) einen angeformten Arm (21) umfaßt, mittels dessen die Verschwenkung des Registrierschlittens (18) erfolgt; und
- Mittel zum Verschwenken des Registrierschlittens (18), welche an dessem Arm (21) angreifen und bewirken, daß in jeder Stellung des Registrierschlittens (18) auf der Führungsstange (10) das Registrierorgan (23) entweder federnd auf dem Aufzeichnungsträger (1) aufliegt oder von dem Aufzeichnungsträger (1) abgehoben ist,
dadurch gekennzeichnet, daß
- der Registrierschlitten (18) über eine Verzahnung (19) mit den Antriebsmitteln (20) verbindbar ist;
- die am Arm (21) des Registrierschlittens (18) angreifenden Mittel zum Verschwenken des Registrierschlittens (18) aus einer achsparallel zur Führungsstange (10) angeordneten und getrieblich mit einem Stellmotor verbindbaren Exzenterwelle (11) gebildet sind, die mit dem Arm (21) in Wirkverbindung steht; und
- an dem Registrierschlitten (18) eine Schenkel- oder Blattfeder (24) befestigt ist derart, daß bei einer Drehung der Exzenterwelle (11) gegen den Aufzeichnungsträger (1) und der dadurch bewirkten Verschwenkung des Registrierschlittens (18) die Schenkel- oder Blattfeder (24) zur Erzielung der erforderlichen Registrierkraft des Registrierorgans (23) auf dem Aufzeichnungsträger (1) gespannt wird.

2. Registrieranordnung für ein Registriergerät nach Anspruch 1,
dadurch gekennzeichnet, daß
- der Arm (35) des Registrierschlittens (32) mit der Exzenterwelle (11) formschlüssig in Verbindung steht und
- an dem Registrierschlitten (32) eine das Registrierorgan (33) tragende Blattfeder (34) befestigt ist.

3. Registrieranordnung für ein Registriergerät nach Anspruch 1,
dadurch gekennzeichnet, daß
- das Registrierorgan (39) mit dem Arm (38) des Registrierschlittens (36) fest verbunden ist,
- der Arm (38) in den Bewegungsbereich der Exzenterwelle (11) einseitig eingreift und
- an dem Registrierschlitten (36) eine Blattfeder (37) befestigt ist, die sich an der Exzenterwelle (11) unter Vorspannung abstützt.

4. Registrieranordnung für ein Registriergerät nach Anspruch 1,
dadurch gekennzeichnet, daß
- an dem das Registrierorgan (23) tragenden Arm (21) des Registrierschlittens (18), welcher in den Bewegungsbereich der Exzenterwelle (11) einseitig eingreift, eine Schenkelfeder (24) angeordnet ist, deren einer Schenkel (28) sich unter Vorspannung an der Exzenterwelle (11) abstützt.

5. Registrieranordnung für ein Registriergerät nach Anspruch 1,
dadurch gekennzeichnet, daß
- die Exzenterwelle (11) durch eine zylindrische, exzentrisch in drehbar gelagerten Mitnehmern (16, 17) gehalterte Stange (15) gebildet ist.

6. Registrieranordnung für ein Registriergerät nach Anspruch 1,
dadurch gekennzeichnet, daß
- die Führungsstange (10) mit dem auf ihr gelagerten Registrierschlitten (18), die Exzenterwelle (11), der Stellmotor sowie die zwischen dem Stellmotor und der Exzenterwelle 11 vorgesehenen Getriebemittel (12, 13, 14) auf einem in ein Registriergerät einsetzbaren Gestell angeordnet sind.

## Claims

1. Recording arrangement for a recording apparatus having the following features:
- a recording slide (18) which is mounted on a guide rod (10) to be displaceable transversely to the direction of conveyance of a recording medium (1) and to be pivotable about the guide rod (10) and which carries a recording member (23) and is connectable to drive means (20) which bring about the movements of the recording slide (18) in the direction of the guide rod (10), the recording slide (18) comprising an integrally moulded arm (21) by means of which the pivoting of the recording slide (18) is effected; and
- means for pivoting the recording slide (18) which act on the arm (21) of the latter and cause the recording member (23), in every position of the recording slide (18) on the guide rod (10), either to rest resiliently on the recording medium (1) or to be lifted off from the recording medium (1),
characterized in that
- the recording slide (18) is connectable to the drive means (20) via toothing (19);
- the means acting on the arm (21) of the recording slide (18) in order to pivot the recording slide (18) are formed from an eccentric shaft (11) which is arranged axially parallel to the guide rod (10) and is connectable by gearing to a positioning motor and which is operatively connected to the arm (21); and
- a leg spring or leaf spring (24) is fastened to the recording slide (18), in such a way that, in the event of a rotation of the eccentric shaft (11) towards the recording medium (1) and the pivoting of the recording slide (18) brought about thereby, the leg spring or leaf spring (24) is tensioned to obtain the necessary recording force of the recording member (23) on the recording medium (1).

2. Recording arrangement for a recording apparatus according to Claim 1,
characterized in that
- the arm (35) of the recording slide (32) is positively connected to the eccentric shaft (11) and
- a leaf spring (34) carrying the recording member (33) is fastened to the recording slide (32).

3. Recording arrangement for a recording apparatus according to Claim 1,
characterized in that
- the recording member (39) is fixedly connected to the arm (38) of the recording slide (36),
- the arm (38) reaches at one end into the movement region of the eccentric shaft (11) and
- a leaf spring (37) supported under pretension on the eccentric shaft (11) is fastened to the recording slide (36).

4. Recording arrangement for a recording apparatus according to Claim 1,
characterized in that
- a leg spring (24), one leg (28) of which is supported under pretension on the eccentric shaft (11), is arranged on the arm (21), carrying the recording member (23), of the recording slide (18) which reaches at one end into the movement region of the eccentric shaft (11).

5. Recording arrangement for a recording apparatus according to Claim 1,
characterized in that
- the eccentric shaft (11) is formed by a cylindrical rod (15) secured eccentrically in rotatably mounted drivers (16, 17).

6. Recording arrangement for a recording apparatus according to Claim 1,
characterized in that
- the guide rod (10) with the recording slide (18) mounted thereon, the eccentric shaft (11), the positioning motor as well as the gearing means (12, 13, 14) provided between the positioning motor and the eccentric shaft 11 are arranged on a frame insertable into a recording apparatus.

## Revendications

1. Dispositif d'enregistrement pour un appareil enregistreur qui présente les caractéristiques suivantes :
Un chariot d'enregistrement (18) monté mobile transversalement au sens de transport d'un support d'enregistrement (1) sur une barre de guidage (10) et pivotant autour de ladite barre de guidage (10), ledit chariot d'enregistrement (18) portant un organe enregistreur (23) et pouvant être relié à des moyens d'entraînement (20) qui opèrent des mouvements dudit chariot d'enregistrement (18) dans le sens de la barre de guidage (10), ledit chariot d'enregistrement (18) englobant un bras (21) moulé dessus au moyen duquel s'effectue le pivotement dudit chariot d'enregistrement (18) ; et
des moyens pour le pivotement du chariot d'enregistrement (18) qui agissent sur le bras (21) de ce dernier et ont pour effet que, quelle que soit la position dudit chariot d'enregistrement (18) sur la barre de guidage (10),
l'organe enregistreur (23) soit pose de manière élastique sur le support d'enregistrement (1) soit il est décollé dudit support d'enregistrement (1),
caractérisé par le fait
que le chariot d'enregistrement (18) peut être relié, par l'intermédiaire d'une denture (19), aux moyens d'entraînement (20) ;
que les moyens agissant sur le bras (21) du chariot d'enregistrement (18) pour le pivotement dudit chariot d'enregistrement (18) sont constitués d'un arbre d'excentrique (11), disposé parallèlement à l'axe de la barre de guidage (10) et pouvant être mis en engrenage avec un moteur pas à pas, qui coopère fonctionnellement avec le bras (21) ; et
qu'au chariot d'enregistrement (18) est fixé un ressort à branches ou à lame (24) de telle sorte que, lors d'une rotation dudit arbre d'excentrique (11) en direction du support d'enregistrement (1) et du pivotement du chariot d'enregistrement (18) ainsi effectué, le ressort à branches ou à lame (24) est bandé pour l'obtention de la force d'enregistrement nécessaire de l'organe enregistreur (23) sur le support d'enregistrement.

2. Dispositif d'enregistrement pour un appareil enregistreur selon la revendication 1,
caractérisé par le fait
que le bras (35) du chariot d'enregistrement (32) se trouve en engagement positif avec l'arbre d'excentrique (11) et
qu'au chariot d'enregistrement (32) est fixé un ressort à lame (34) portant l'organe enregistreur (33).

3. Dispositif d'enregistrement pour un appareil enregistreur selon la revendication 1,
caractérisé par le fait
que l'organe enregistreur (39) est rigidement relié au bras (38) du chariot d'enregistrement (36),
que le bras (38) s'engage unilatéralement dans la zone de mouvement de l'arbre d'excentrique (11) et
qu'au chariot d'enregistrement (36) est fixé un ressort à lame (37) qui s'appuie avec une précontrainte sur l'arbre d'excentrique (11).

4. Dispositif d'enregistrement pour un appareil enregistreur selon la revendication 1,
caractérisé par le fait
que sur le bras (21) portant l'organe enregistreur (23) du chariot d'enregistrement (18), qui s'engage unilatéralement dans la zone de mouvement de l'arbre d'excentrique (11), est disposé un ressort à branches (24) dont l'une des branches (28) s'appuie avec une précontrainte sur ledit arbre d'excentrique (11).

5. Dispositif d'enregistrement pour un appareil enregistreur selon la revendication 1,
caractérisé par le fait
que l'arbre d'excentrique (11) est formé par une barre cylindrique (15) fixée, de manière excentrée, dans des taquets d'entraînement (16, 17) montés à rotation.

6. Dispositif d'enregistrement pour un appareil enregistreur selon la revendication 1,
caractérisé par le fait
que la barre de guidage (10) avec le chariot d'enregistrement (18) monté sur cette dernière, l'arbre d'excentrique (11), le moteur pas à pas ainsi que les moyens d'engrenage (12, 13, 14) prévus entre ledit moteur pas à pas et ledit arbre d'excentrique (11) sont disposés sur un bâti pouvant être inséré dans un appareil enregistreur.
